(19) Europäisches Patentamt
European Patent Office
Office européen des brevets

(11) **EP 4 733 201 A1**

(12) **DEMANDE DE BREVET EUROPEEN**

(43) Date de publication:
**29.04.2026 Bulletin 2026/18**

(21) Numéro de dépôt: **25210430.2**

(22) Date de dépôt: **22.10.2025**

(51) Classification Internationale des Brevets (IPC):
**B64G 1/10** (2006.01)   **B64G 1/24** (2006.01)
**B64G 1/44** (2006.01)

(52) Classification Coopérative des Brevets (CPC):
**B64G 1/245; B64G 1/1085; B64G 1/443**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **23.10.2024 FR 2411537**

(71) Demandeur: **THALES**
**92190 Meudon (FR)**

(72) Inventeur: **HACHE, Raphaël**
**06156 CANNES LA BOCCA (FR)**

(74) Mandataire: **Lavoix**
**2, place d'Estienne d'Orves**
**75441 Paris Cedex 09 (FR)**

(54) **CALCULATEUR DE POSITIONNEMENT POUR SATELLITE AYANT UN SYSTÈME OPTIQUE DE COMMUNICATION INTER-SATELLITES SUR UNE FACE ANTI-TERRE**

(57) Calculateur de positionnement d'un satellite (10) destiné à se déplacer dans un plan orbital (P), le satellite étant destiné à comprendre :
- une caisse (32) ayant une face Terre (34) définissant un axe Z du satellite destiné à pointer vers la Terre (12),
- au moins un système optique pour communiquer avec un autre satellite situé dans le plan orbital, le premier système optique étant destiné à être situé sur une face anti-Terre (46), et à avoir un champ de visée en azimuth

autour de l'axe Z, le champ de visée étant limité par un angle d'obturation dû à la caisse.

Le calculateur est adapté pour obtenir un paramètre représentatif d'un angle solaire ($\beta$) défini par le Soleil (16) avec le plan orbital, et pour réaliser le calcul d'un paramètre représentatif de l'angle de lacet ($\psi$) du satellite en utilisant au moins le paramètre représentatif de l'angle solaire et un paramètre représentatif de l'angle d'obturation.

FIG.1

**Description**

La présente invention concerne un calculateur de positionnement d'un satellite, notamment de télécommunications, adapté pour fournir un paramètre représentatif d'un angle de lacet du satellite, le satellite étant destiné à se déplacer dans un plan orbital, et à communiquer avec au moins un autre satellite situé dans le plan orbital à l'aide d'un système optique, le calculateur étant adapté pour obtenir un paramètre représentatif d'un angle solaire défini par le Soleil avec le plan orbital, et pour réaliser un calcul du paramètre représentatif de l'angle de lacet en utilisant au moins le paramètre représentatif de l'angle solaire.

L'invention concerne aussi un satellite comprenant un tel calculateur.

L'invention concerne aussi un procédé pour fournir le paramètre représentatif de l'angle de lacet, un produit programme d'ordinateur correspondant, ainsi qu'un procédé de positionnement d'un tel satellite.

ART ANTERIEUR

Il est connu d'opérer des constellations de satellites réalisant des liens inter-satellites optiques. Les liens inter-satellites permettent de connecter un satellite directement à ses voisins sans redescendre vers un pays tiers. Ces liens, par bonds successifs, offrent la possibilité, dans le cadre d'une constellation mondiale, de connecter un utilisateur n'importe où sur Terre à une station au sol elle aussi n'importe où sur Terre.

Dans une constellation, au moins certains des satellites évoluent dans un même plan orbital (ils sont dits « intra-plans »), avec des écarts angulaires relativement constants entre eux, et communiquent entre eux de proche en proche à l'aide de système optiques leur permettant d'émettre et/ou de recevoir des signaux.

Chaque satellite possède une face dite « Terre » qui définit un axe Z pointant vers la Terre et qui comporte des antennes vers les utilisateurs, des antennes vers les stations au sol et éventuellement d'autres équipements visant la Terre.

Par ailleurs, pour son alimentation en énergie, chaque satellite comprend un ou des panneaux solaires montés rotatifs par rapport à la caisse du satellite autour d'un axe Y perpendiculaire à l'axe Z. On définit également un axe X perpendiculaire aux deux autres. L'axe X définit, avec un axe X0 de référence dans le plan orbital, un angle de lacet du satellite autour de l'axe Z.

L'orientation de chaque satellite est habituellement contrôlée de telle manière que les panneaux solaires puissent, par une rotation autour de l'axe Y, se placer perpendiculairement au rayonnement solaire. Pour ce faire, un calculateur détermine une valeur de l'angle de lacet telle que le Soleil soit dans le plan défini par l'axe X et l'axe Z.

Chaque satellite est ainsi soumis à une loi de contrôle, dite « en lacet » (en anglais *yaw steering law*), qui assure que les panneaux solaires soient correctement orientés en fonction de l'angle fait par le Soleil par rapport au plan orbital, et de la position du satellite sur son orbite.

Chaque satellite comporte par exemple jusqu'à trois au quatre systèmes optiques assurant les liens inter-satellites. Chaque système optique vise un autre satellite selon un une direction formant un angle de par exemple 60° avec l'axe Z dans le plan orbital. Afin d'avoir l'autre satellite dans son champ de visée en toutes circonstances, sachant que l'angle de lacet varie potentiellement de 0° à 180°, chacun des systèmes optiques est situé sur la face Terre.

La présence des systèmes optiques, en plus des autres équipements précités, sur la face Terre crée un certain encombrement sur la face Terre, qui doit être pris en compte lors de la conception des satellites.

Un but de l'invention est de remédier à tout ou partie des inconvénients ci-dessus, en fournissant un équipement permettant d'alléger la contrainte due à l'encombrement de la face Terre, tout en préservant le fonctionnement du satellite, notamment les liens inter-satellites.

RESUME DE L'INVENTION

L'invention a pour objet un calculateur de positionnement selon la revendication 1.

Suivant d'autres aspects avantageux de l'invention, le calculateur comprend une ou plusieurs des caractéristiques correspondant aux revendications 2 à 4, prise(s) isolément ou suivant toutes les combinaisons techniquement possibles.

L'invention a aussi pour objet un satellite selon la revendication 5.

Suivant d'autres aspects avantageux de l'invention, le satellite comprend une ou plusieurs des caractéristiques correspondant aux revendications 6 et 7, prise(s) isolément ou suivant toutes les combinaisons techniquement possibles.

L'invention a aussi pour objet un procédé selon la revendication 8.

L'invention a aussi pour objet un produit programme d'ordinateur comportant des instructions logicielles qui, lorsque mises en œuvre par un équipement informatique, permettent de réaliser le procédé tel que défini précédemment.

L'invention a aussi pour objet un procédé selon la revendication 9.

BREVE DESCRIPTION DES DESSINS

L'invention apparaîtra plus clairement à la lecture de la description qui va suivre, donnée uniquement à titre d'exemple non limitatif, et faite en référence aux dessins annexés, dans lesquels :

la figure 1 est une vue schématique d'un satellite selon l'invention, en orbite autour de la Terre, le satellite étant représenté dans quatre positions successives sur son orbite, correspondant à quatre angles de position valant environ 0°, 90°, 180° et 270°,

la figure 2 est une vue schématique d'une constellation de satellites incluant le satellite représenté sur la figure 1, la constellation étant située dans le plan orbital du satellite et vue selon une direction perpendiculaire au plan orbital,

la figure 3 est une vue schématique, en perspective, du satellite représenté sur les figures 1 et 2, montrant deux systèmes optiques de communication, la face Terre du satellite étant dirigée vers le haut, et

la figure 4 est une vue schématique du satellite représenté sur les figures 1 à 3, selon l'axe Z, montrant la face anti-Terre, les deux systèmes optiques représentés sur la figure 3, et leurs champs de visée respectifs.

DESCRIPTION DETAILLEE

Satellite

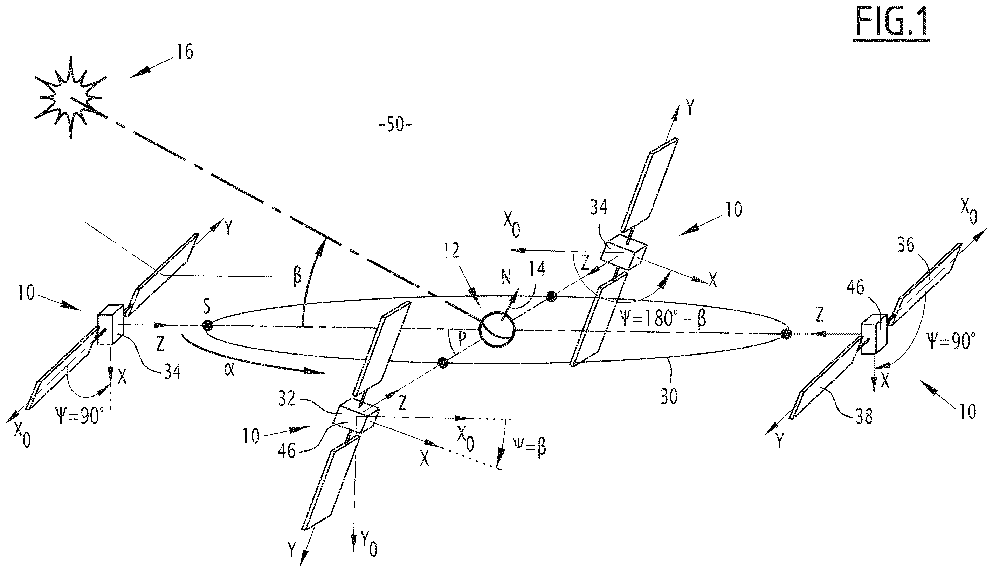

En référence à la figure 1, on décrit un satellite 10 artificiel selon l'invention.

Le satellite 10 est en orbite autour de la Terre 12, dont on a représenté l'axe de rotation propre 14, dans un plan orbital P avec lequel le soleil 16 définit un angle solaire $\beta$.

Le satellite 10 définit avec un point sub-solaire S un angle de position $\alpha$ dans le plan orbital P, vu de la Terre 12. Sur la figure 1, le satellite 10 est représenté dans quatre positions successives correspondant sensiblement aux valeurs 0°, 90°, 180°, 270° de l'angle de position $\alpha$.

Le point sub-solaire S indique la direction du Soleil 16 par rapport à la Terre 12 dans le plan orbital P.

Le satellite 10 est par exemple un satellite de télécommunications, comportant des équipements spécifiques à cette fonction, connus en eux-mêmes et qui ne seront pas détaillés.

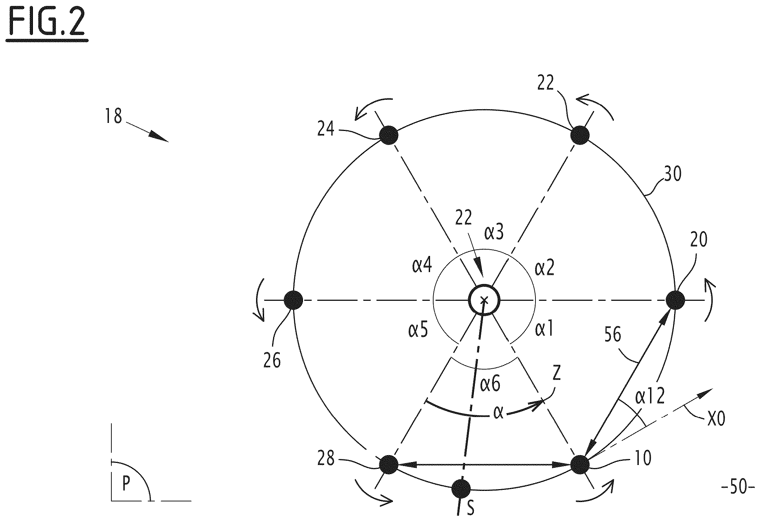

Le satellite 10 fait avantageusement partie d'une constellation 18, représentée sur la figure 2, comportant par exemple cinq autres satellites 20, 22, 24, 26, 28 analogues au satellite 10 et se déplaçant dans le plan orbital P, avantageusement sur la même orbite 30 que le satellite 10. Les autres satellites 10, 20, 22, 24, 26, 28 définissent par exemple des angles $\alpha 1$, $\alpha 2$, $\alpha 3$, $\alpha 4$, $\alpha 5$, $\alpha 6$ successifs sensiblement égaux vus de la Terre 12, valant environ 60° dans l'exemple.

En variante (non représentée), la constellation 18 comporte un nombre différent de satellites, par exemple sept ou huit, et/ou le satellite 10, les autres satellites 20, 22, 24, 26, 28 ne définissent pas entre eux des angles sensiblement égaux.

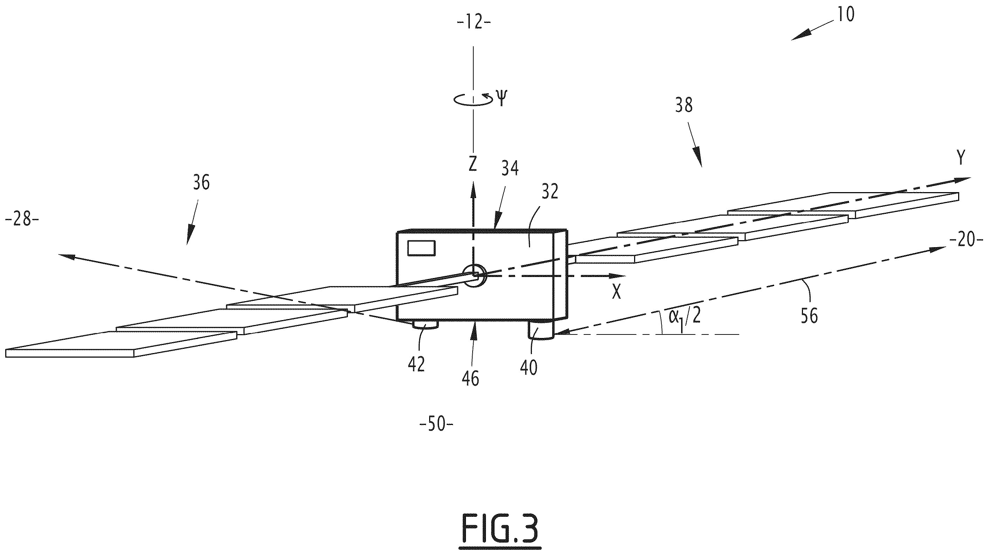

Le satellite 10 comprend une caisse 32 (figures 1, 3) ayant une face Terre 34 définissant un axe Z lié au satellite et pointant vers la Terre 12.

Le satellite 10 comprend deux panneaux solaires 36, 38 montés rotatifs par rapport à la caisse 32 autour d'un axe Y du satellite perpendiculaire à l'axe Z.

En variante (non représentée), le satellite 10 ne comprend qu'un seul panneau solaire.

Le satellite 10 définit aussi un axe X perpendiculaire à l'axe Y et à l'axe Z.

L'axe X et un axe de référence X0 définissent ensemble un angle de lacet $\psi$ du satellite autour de l'axe Z, l'axe de référence X0 étant perpendiculaire à l'axe Z, situé dans le plan orbital P et orienté dans le sens d'une augmentation de l'angle de position $\alpha$.

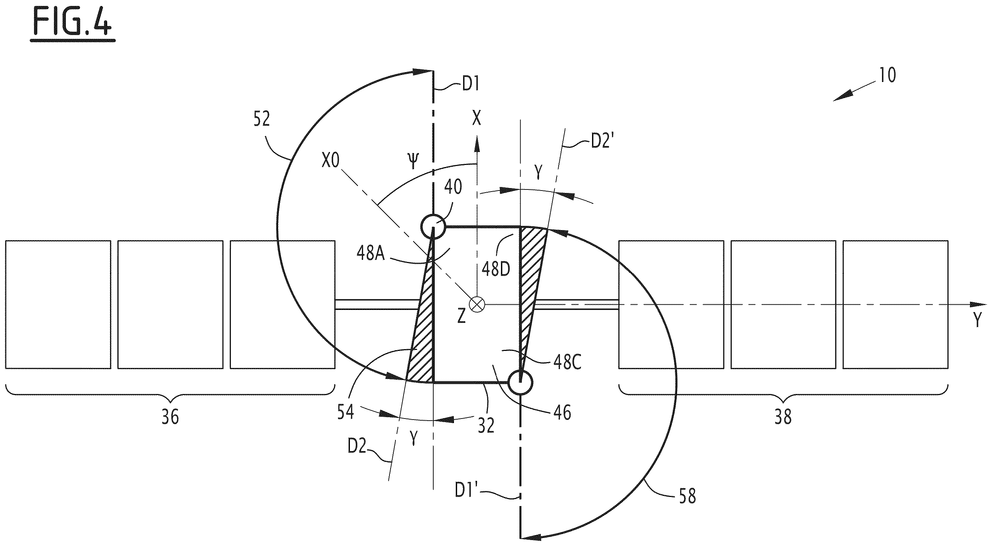

Le satellite 10 comprend un premier système optique 40 (figures 3 et 4) pour communiquer avec un autre satellite de la constellation 18, par exemple le satellite 20 précédant le satellite 10, et avantageusement un deuxième système optique 42 pour communiquer avec un autre satellite, par exemple le satellite 28 suivant le satellite 10 dans la constellation 18.

Le satellite 10 comprend un calculateur 44 (figure 3) adapté pour fournir un paramètre représentatif de l'angle de lacet $\psi$, par exemple l'angle de lacet $\psi$ lui-même.

Par « un paramètre représentatif d'une grandeur », on entend que la grandeur peut être obtenue à partir de ce paramètre.

Comme visible sur les figures 3 et 4, le premier système optique 40 et le deuxième système optique 42 sont situés sur une face anti-Terre 46 du satellite, opposée à la face Terre 34 selon l'axe Z.

La face anti-Terre 46 définit par exemple quatre coins 48A, 48B, 48C, 48D, le premier système optique 40 étant avantageusement fixé sur l'un des quatre coins 48A, 48B, 48C, 48D et étant protubérant par rapport à la face anti-Terre 46 selon l'axe Z vers l'espace 50 (à l'opposé de la Terre selon l'axe Z).

Par « coin », on entend par exemple une zone de la face anti-Terre 46, située à moins de 30 cm d'un sommet, voire à moins de 20 cm.

Le premier système optique 40 a un champ de visée 52 en azimuth autour de l'axe Z, le champ de visée 52 incluant une première direction D1 parallèle à l'axe Y et s'étendant sans interruption jusqu'à une deuxième direction D2 formant avec la première direction D1 un angle de 180° moins un angle d'obturation $\gamma$ dû à la caisse 32. En effet, bien que le premier système optique 40 soit protubérant par rapport à la face anti-Terre 46, cette face l'empêche de communiquer avec le satellite 20 lorsque le satellite 20 se retrouve en azimuth dans l'angle grisé 54 sur la Figure 4, la caisse 32 constituant alors un obstacle par les signaux optiques 56.

De même, dans l'exemple, le deuxième système optique 42 est avantageusement fixé sur un autre des quatre coins 48A, 48B, 48C, 48D et est protubérant par rapport à la face anti-Terre 46 selon l'axe Z vers l'espace 50, l'autre des quatre coins étant diagonalement opposé à celui des quatre coins sur lequel le premier système optique 40 est fixé.

Le deuxième système optique 42 a un champ de visée 58 en azimuth autour de l'axe Z, le champ de visée 58 incluant une première direction D1' parallèle à l'axe Y (et donc à la direction D1) et s'étendant sans interruption jusqu'à une deuxième direction D2' formant avec la première direction D1' un angle de 180° moins l'angle d'obturation $\gamma$.

L'angle d'obturation $\gamma$ dépend notamment de la forme de la caisse 32, de l'angle d'élévation entre le système optique 42 et le satellite 28, et de l'aménagement du système optique 42 sur la caisse 32.

Avantageusement, le premier système optique 40 et le deuxième système optique 42 sont situés en porte-à-faux par rapport à la face anti-Terre 46, notamment selon l'axe Y. Dit autrement, le premier système optique 40 et le deuxième système optique 42 « débordent » de la face anti-Terre 46 selon l'axe Y. Ce porte-à-faux est visible schématiquement sur la figure 4.

L'angle d'obturation $\gamma$ est avantageusement le plus faible possible, et est par exemple compris entre 10° et 20°.

Calculateur et obtention de l'angle de lacet

Le calculateur 44 est adapté pour obtenir un paramètre représentatif de l'angle solaire $\beta$, par exemple l'angle solaire $\beta$ lui-même, et avantageusement au moins un paramètre représentatif de l'angle d'obturation $\gamma$, par exemple l'angle d'obturation $\gamma$, et pour réaliser un calcul du paramètre représentatif de l'angle de lacet $\psi$ en utilisant au moins le paramètre représentatif de l'angle solaire $\beta$ et le paramètre représentatif de l'angle d'obturation $\gamma$.

Dans l'exemple, le calculateur 44 est également adapté pour obtenir un paramètre représentatif de l'angle de position $\alpha$, par exemple l'angle de position $\alpha$ lui-même, mais le calculateur 44 ne l'utilise pas dans tous les cas, comme cela sera expliqué plus bas.

L'angle solaire $\beta$ et l'angle de position $\alpha$ sont par exemple des mesures fournies par des capteurs du satellite (non représentés) connus en eux-mêmes.

En variante, l'angle solaire $\beta$ et l'angle de position $\alpha$ sont eux-mêmes calculés par le calculateur 44 à partir de mesures.

L'angle d'obturation $\gamma$ est par exemple fourni au calculateur 44 ou est déjà présent dans une mémoire (non représentée) du calculateur 44.

Le calculateur 44 est avantageusement configuré pour calculer l'angle de lacet $\psi$ différemment en fonction d'une appartenance de l'angle solaire $\beta$ à des plages de valeurs.

Le calculateur 44 est avantageusement configuré pour que :

- si l'angle solaire $\beta$ est supérieur en valeur absolue à un premier seuil S1, alors l'angle de lacet $\psi$ est calculé en utilisant l'angle solaire $\beta$ et le paramètre représentatif de l'angle de position $\alpha$ ; et
- si l'angle solaire $\beta$ inférieur ou égal en valeur absolue au premier seuil S1, l'angle de lacet $\psi$ est calculé indépendamment de l'angle de position $\alpha$.

Le calculateur 44 est par exemple configuré pour que :

- si l'angle solaire $\beta$ est supérieur en valeur absolue à un deuxième seuil S2 supérieur au premier seuil S1, alors l'angle de lacet $\psi$ est calculé selon une loi de contrôle telle que le Soleil 16 est destiné à se trouver dans un plan (X,Z) défini par l'axe X et l'axe Z ;
- si l'angle solaire $\beta$ est inférieur ou égal en valeur absolue au deuxième seuil S2 et supérieur au premier seuil S1, alors l'angle de lacet $\psi$ est calculé selon ladite loi de contrôle limitée à une valeur maximale M ; et
- si l'angle solaire $\beta$ est inférieur ou égal en valeur absolue au premier seuil S1, le paramètre représentatif de l'angle de lacet $\psi$ est égal à une constante C.

Par exemple, le premier seuil S1 est égal à l'angle d'obturation $\gamma$ divisé par deux.

Par exemple, le deuxième seuil S2 est égal à l'angle d'obturation $\gamma$.

Avantageusement, la valeur maximale M est égale à 180° moins l'angle d'obturation γ, et ladite constante C est égal à zéro.

Il est ainsi à noter que le premier seuil S1, le deuxième seuil S2 et la valeur maximale M sont des paramètres représentatifs de l'angle de d'obturation γ.

Ainsi, dans l'exemple :

Si |β| > S2, alors :

$$\psi = 90° + atan2\,[sign(\beta).sin(\beta); sign(\beta).sin(\propto)cos(\beta)] \qquad (1)$$

**Si** S1 < |β| ≤ S2, alors :

$$\psi = \text{Max}\,\{M; 90° + atan2\,[sign(\beta).sin(\beta); sign(\beta).sin(\propto)cos(\beta)]\} \qquad (2)$$

Si |β| ≤ S1, alors :

$$\psi = C \qquad (3)$$

avec S1 = γ ; S2 = γ/2 ; M = 180°- γ ; C = 0°, tous les angles étant exprimés en degrés.

Le fonctionnement du calculateur 44 découle de sa structure et ne sera pas décrit en détail. Ce fonctionnement illustre un procédé selon l'invention.

Le calculateur 44 comprend par exemple un logiciel, et un processeur (non représenté) adaptés pour exécuter ce logiciel afin de mettre en œuvre un tel procédé.

En variante, le calculateur 44 comprend un ou des circuits logiques programmables, tels que des circuits de FGPA (de l'anglais « *Field Pragrammable Gate Array* ») se substituant totalement ou partiellement au logiciel.

Positionnement du satellite

Un procédé de positionnement du satellite 10 se déduit également de la structure du satellite 10 décrite ci-dessus et ne sera pas décrit en détail.

Le paramètre représentatif de l'angle de lacet ψ, ici l'angle de lacet ψ lui-même, est avantageusement transmis à un ou plusieurs effecteurs (non représentés) du satellite 10 adaptés pour modifier l'angle de lacet effectif du satellite 10.

Pour des valeurs de l'angle solaire β supérieures à γ ou inférieures à -γ, le satellite 10 suit une loi de contrôle habituelle en lacet. Le Soleil 16 se trouve dans le plan X,Z et les panneaux solaires 36, 38 sont parfaitement orientés perpendiculairement au rayonnement solaire.

Pour des valeurs de l'angle solaire β comprises entre γ/2 et γ, ou entre -γ et -γ/2, la loi de contrôle reste la loi de contrôle en lacet habituelle, mais limitée à la valeur maximale M.

Pour des valeurs encore plus faibles de l'angle solaire β, comprises entre -γ/2 et γ/2, le contrôle en lacet est arrêté et l'angle de lacet ψ visé est de 0°. L'axe X pointe alors dans le sens du vecteur vitesse du satellite 10.

Ainsi, les panneaux solaires 36, 38 subissent un dépointage maximal égal à γ/2. Cela crée une légère perte de puissance électrique fournie par les panneaux solaires 36, 38, de par exemple 0,4% si γ = 10°. En outre, la face de la caisse 32 servant de radiateur pour évacuer la chaleur du satellite 10 reçoit un léger rayonnement solaire, d'environ 25 W/m$^2$ dans les conditions précitées.

Avantages

Grâce aux caractéristiques décrites ci-dessus, le calculateur 44 est adapté pour fournir un paramètre représentatif de l'angle de lacet ψ du satellite 10 permettant un positionnement adéquat du satellite 10, alors que les systèmes optiques 40, 42 dédiés à la communication inter-satellites sont placés sur la face anti-Terre 46 de manière totalement contre-intuitive. Dit autrement, le calculateur 44 permet de placer les systèmes optiques 40, 42 sur la face anti-Terre 46 tout en assurant leur bon fonctionnement.

Ainsi, la face Terre 34 est moins encombrée, ce qui relâche la contrainte due à son encombrement. En pratique, les dimensions de la face Terre 34 peuvent être réduites par rapport à une situation où les systèmes optiques 40, 42 seraient sur la face Terre 34.

Comme on l'a vu ci-dessus, pour les angles solaires faibles, il se produit un léger dépointage de l'axe Y par rapport à un contrôle en lacet parfait, mais les conséquences de ce dépointage sont minimes comparées aux bénéfices liés au désencombrement de la face Terre 34.

**Revendications**

1. Calculateur (44) de positionnement d'un satellite (10) adapté pour fournir un paramètre représentatif d'un angle de lacet ($\psi$) du satellite (10), le satellite (10) étant destiné à se déplacer dans un plan orbital (P), le satellite (10) et un point sub-solaire (S) du plan orbital (P) étant destinés à définir un angle de position ($\alpha$) du satellite (10) vu de la Terre (12), le satellite (10) étant destiné à comprendre :

   - une caisse (32) ayant une face Terre (34) définissant un axe Z du satellite (10) destiné à pointer vers la Terre (12),
   - au moins un panneau solaire (36) monté rotatif par rapport à la caisse (32) autour d'un axe Y du satellite (10) perpendiculaire à l'axe Z, le satellite (10) définissant un axe X perpendiculaire à l'axe Y et à l'axe Z, l'axe X et un axe de référence X0 définissant l'angle de lacet ($\psi$), l'axe de référence X0 étant perpendiculaire à l'axe Z, situé dans le plan orbital (P) et orienté dans le sens d'une augmentation de l'angle de position ($\alpha$), et
   - au moins un premier système optique (40) pour communiquer avec un autre satellite (20) situé dans le plan orbital (P), le premier système optique (40) étant destiné à être situé sur une face anti-Terre (46) du satellite (10), opposée à la face Terre (34) selon l'axe Z, et destiné à avoir un champ de visée (52) en azimuth autour de l'axe Z, le champ de visée (52) incluant une première direction (D1) parallèle à l'axe Y et s'étendant jusqu'à une deuxième direction (D2) formant avec la première direction (D1) un angle de 180° moins un angle d'obturation ($\gamma$) dû à la caisse (32),
   le calculateur (44) étant adapté pour obtenir un paramètre représentatif d'un angle solaire ($\beta$) défini par le Soleil (16) avec le plan orbital (P), et pour réaliser un calcul du paramètre représentatif de l'angle de lacet ($\psi$) en utilisant au moins le paramètre représentatif de l'angle solaire ($\beta$),
   **caractérisé en ce que** le calculateur (44) est configuré pour utiliser un paramètre représentatif de l'angle d'obturation ($\gamma$) dans ledit calcul.

2. Calculateur (44) selon la revendication 1, **caractérisé en ce qu'**il est configuré pour calculer le paramètre représentatif de l'angle de lacet ($\psi$) différemment en fonction d'une appartenance du paramètre représentatif de l'angle solaire ($\beta$) à des plages de valeurs.

3. Calculateur (44) selon la revendication 2, **caractérisé en ce qu'**il est configuré pour que :

   - si le paramètre représentatif de l'angle solaire ($\beta$) est tel que l'angle solaire ($\beta$) est inférieur ou égal en valeur absolue à un premier seuil (S1), le paramètre représentatif de l'angle de lacet ($\psi$) est égal à une constante (C) ;
   - si le paramètre représentatif de l'angle solaire ($\beta$) est tel que l'angle solaire ($\beta$) est supérieur en valeur absolue à un deuxième seuil (S2) supérieur au premier seuil (S1), alors le paramètre représentatif de l'angle de lacet ($\psi$) est calculé selon une loi de contrôle telle que le Soleil (16) est destiné à se trouver dans un plan défini par l'axe X et l'axe Z ; et
   - si le paramètre représentatif de l'angle solaire ($\beta$) est tel que l'angle solaire ($\beta$) est inférieur ou égal en valeur absolue au deuxième seuil (S2) et supérieur au premier seuil (S1), alors le paramètre représentatif de l'angle de lacet ($\psi$) est calculé selon ladite loi de contrôle limitée à une valeur maximale (M).

4. Calculateur (44) selon la revendication 3, **caractérisé en ce que** :

   - le premier seuil (S1) est égal à l'angle d'obturation ($\gamma$) divisé par deux,
   - le deuxième seuil (S2) est égal à l'angle d'obturation ($\gamma$),
   - ladite valeur maximale (M) est égale à 180° moins l'angle d'obturation ($\gamma$), et/ou
   - ladite constante (C) est égal à zéro.

5. Satellite (10) destiné à se déplacer dans un plan orbital (P), le satellite (10) et un point sub-solaire (S) du plan orbital (P) définissant un angle de position ($\alpha$) du satellite vu de la Terre (12), le satellite (10) comprenant :

   - une caisse (32) ayant une face Terre (34) définissant un axe Z du satellite (10) destiné à pointer vers la Terre (12),
   - au moins un panneau solaire (36) monté rotatif par rapport à la caisse (32) autour d'un axe Y du satellite (10) perpendiculaire à l'axe Z, le satellite (10) définissant un axe X perpendiculaire à l'axe Y et à l'axe Z, l'axe X et un axe de référence X0 définissant un angle de lacet ($\psi$) du satellite (10) autour de l'axe Z, l'axe de référence X0 étant perpendiculaire à l'axe Z, situé dans le plan orbital (P) et orienté dans le sens d'une augmentation de l'angle de position (α),
- au moins un premier système optique (40) pour communiquer avec un autre satellite (20) situé dans le plan orbital (P), le premier système optique (40) étant situé sur une face anti-Terre (46) du satellite (10), opposée à la face Terre (34) selon l'axe Z, et ayant un champ de visée (52) en azimuth autour de l'axe Z, le champ de visée (52) incluant une première direction (D1) parallèle à l'axe Y et s'étendant jusqu'à une deuxième direction (D2) formant avec la première direction (D1) un angle de 180° moins un angle d'obturation (γ) dû à la caisse (32), et
- un calculateur (44) selon l'une quelconque des revendications 1 à 4 adapté pour fournir un paramètre représentatif de l'angle de lacet (ψ), le calculateur (44) étant adapté pour obtenir un paramètre représentatif d'un angle solaire (β) défini par le Soleil (16) avec le plan orbital (P), et pour réaliser un calcul du paramètre représentatif de l'angle de lacet (ψ) en utilisant au moins le paramètre représentatif de l'angle solaire (β),

**caractérisé en ce que** le calculateur (44) est configuré pour utiliser un paramètre représentatif de l'angle d'obturation (γ) dans ledit calcul.

6. Satellite (10) selon la revendication 5, dans lequel la face anti-Terre (46) définit quatre coins (48A, 48B, 48C, 48D), le premier système optique (40) étant fixé sur l'un des quatre coins (48A, 48B, 48C, 48D) et étant protubérant par rapport à la face anti-Terre (46) selon l'axe Z vers l'espace (50).

7. Satellite (10) selon la revendication 6, comprenant un deuxième système optique (42) fixé sur un autre des quatre coins (48A, 48B, 48C, 48D) et étant protubérant par rapport à la face anti-Terre (46) selon l'axe Z vers l'espace (50), l'autre des quatre coins (48A, 48B, 48C, 48D) étant diagonalement opposé à celui des quatre coins (48A, 48B, 48C, 48D) sur lequel le premier système optique (40) est fixé.

8. Procédé pour fournir un paramètre représentatif d'un angle de lacet (ψ) d'un satellite (10), le satellite (10) étant destiné à se déplacer dans un plan orbital (P), le satellite (10) et un point sub-solaire (S) du plan orbital (P) étant destinés à définir un angle de position (α) du satellite (10) vu de la Terre (12), le satellite (10) étant destiné à comprendre :

   - une caisse (32) ayant une face Terre (34) définissant un axe Z du satellite (10) destiné à pointer vers la Terre (12),
   - au moins un panneau solaire (36) monté rotatif par rapport à la caisse (32) autour d'un axe Y du satellite (10) perpendiculaire à l'axe Z, le satellite (10) définissant un axe X perpendiculaire à l'axe Y et à l'axe Z, l'axe X et un axe de référence X0 définissant l'angle de lacet (ψ), l'axe de référence X0 étant perpendiculaire à l'axe Z, situé dans le plan orbital (P) et orienté dans le sens d'une augmentation de l'angle de position (α), et
   - au moins un premier système optique (40) pour communiquer avec un autre satellite (20) situé dans le plan orbital (P), le premier système optique (40) étant destiné à être situé sur une face anti-Terre (46) du satellite (10), opposée à la face Terre (34) selon l'axe Z, et destiné à avoir un champ de visée (52) en azimuth autour de l'axe Z, le champ de visée (52) incluant une première direction (D1) parallèle à l'axe Y et s'étendant jusqu'à une deuxième direction (D2) formant avec la première direction (D1) un angle de 180° moins un angle d'obturation (γ) dû à la caisse (32),
   le procédé comprenant :

      - une obtention, par un calculateur (44) selon l'une quelconque des revendications 1 à 4, d'un paramètre représentatif d'un angle solaire (β) défini par le Soleil (16) avec le plan orbital (P), et
      - un calcul, par le calculateur (44), d'un paramètre représentatif de l'angle de lacet (ψ) en utilisant au moins le paramètre représentatif de l'angle solaire (β),

   **caractérisé en ce que** le procédé comprend l'utilisation, par le calculateur (44), d'un paramètre représentatif de l'angle d'obturation (γ) dans ledit calcul.

9. Procédé de positionnement d'un satellite (10) selon l'une quelconque des revendications 5 à 7, le satellite (10) se déplaçant dans un plan orbital (P), le satellite (10) et un point sub-solaire (S) du plan orbital (P) définissant un angle de position (α) du satellite (10) vu de la Terre (12), le procédé comprenant :

   - une obtention, par le calculateur (44), d'un paramètre représentatif de l'angle solaire (β), et
   - un calcul, par le calculateur (44), d'un paramètre représentatif de l'angle de lacet (ψ) en utilisant au moins le paramètre représentatif de l'angle solaire (β),

   **caractérisé en ce que** le procédé comprend l'utilisation, par le calculateur (44), d'un paramètre représentatif de l'angle d'obturation (γ) dans ledit calcul.

**FIG.1**

FIG.2

-12-

$\psi$

-28-

36

Z

34

32

38

Y

-20-

X

$\alpha_1/2$

56

42

46

40

-50-

10

EP 4 733 201 A1

10

FIG.3

FIG.4

EP 4 733 201 A1

Europäisches Patentamt
European Patent Office
Office européen des brevets

**RAPPORT DE RECHERCHE EUROPEENNE**

Numéro de la demande

EP 25 21 0430

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2007/080858 A1 (O'BRIEN KEVIN M [US] ET AL) 12 avril 2007 (2007-04-12) * alinéas [0028], [0035] - [0046], [0056]; figures 1-11 * ----- | 1-9 | INV. B64G1/10 B64G1/24 B64G1/44 |
| A | US 2009/012662 A1 (LIU KETAO [US] ET AL) 8 janvier 2009 (2009-01-08) * alinéas [0021] - [0024], [0040]; figures 1-8 * ----- | 1-9 | |
| A | EP 3 353 908 B1 (LOCKHEED CORP [US]) 4 novembre 2020 (2020-11-04) * alinéa [0020]; figures 1-9B * ----- | 1-9 | |
| A | US 6 295 021 B1 (LICHTEN STEPHEN M [US] ET AL) 25 septembre 2001 (2001-09-25) * colonne 13, ligne 65 - colonne 16, ligne 6; figures 1-8 * ----- | 1-9 | |

**DOMAINES TECHNIQUES RECHERCHES (IPC)**

B64G

Le présent rapport a été établi pour toutes les revendications

| Lieu de la recherche | Date d'achèvement de la recherche | Examinateur |
|---|---|---|
| Munich | 12 février 2026 | Hofmann, Udo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................................
& : membre de la même famille, document correspondant

EPO FORM 1503 03.82 (P04C02)

12

**ANNEXE AU RAPPORT DE RECHERCHE EUROPEENNE
RELATIF A LA DEMANDE DE BREVET EUROPEEN NO.**

**EP 25 21 0430**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**12-02-2026**

| Document brevet cité au rapport de recherche | Date de publication | Membre(s) de la famille de brevet(s) | | Date de publication |
|---|---|---|---|---|
| US 2007080858 A1 | 12-04-2007 | AUCUN | | |
| US 2009012662 A1 | 08-01-2009 | AUCUN | | |
| EP 3353908 B1 | 04-11-2020 | EP | 3353908 A1 | 01-08-2018 |
| | | JP | 6824257 B2 | 03-02-2021 |
| | | JP | 2018535136 A | 29-11-2018 |
| | | US | 2017093483 A1 | 30-03-2017 |
| | | WO | 2017053694 A1 | 30-03-2017 |
| US 6295021 B1 | 25-09-2001 | US | 5963167 A | 05-10-1999 |
| | | US | 6295021 B1 | 25-09-2001 |

EPO FORM P0460

Pour tout renseignement concernant cette annexe : voir Journal Officiel de l'Office européen des brevets, No.12/82